Europäisches Patentamt

(19) European Patent Office (11) Publication number: **0 073 529**
Office européen des brevets **B1**

(12) **EUROPEAN PATENT SPECIFICATION**

(45) Date of publication of patent specification: **23.09.87** (51) Int. Cl.⁴: **C 08 F 265/02, C 08 F 265/04, C 08 F 285/00, C 08 F 291/00, C 09 D 3/727**

(21) Application number: **82109600.5**

(22) Date of filing: **26.06.80**

(60) Publication number of the earlier application in accordance with Art. 76 EPC: **0 022 633**

(54) **Preparation of sequential polymers and use thereof in coating compositions and as thickening agents.**

(30) Priority: **26.06.79 US 52280**
**12.06.80 US 158759**

(43) Date of publication of application:
**09.03.83 Bulletin 83/10**

(45) Publication of the grant of the patent:
**23.09.87 Bulletin 87/39**

(84) Designated Contracting States:
**BE DE FR GB IT NL SE**

(56) References cited:
**FR-A-2 084 780**
**US-A-3 454 516**
**US-A-3 502 604**
**US-A-3 745 196**
**US-A-4 151 143**
**CHEMICAL ABSTRACTS, vol. 82, no. 10, 10th March 1975, page 61, no. 58883z, Columbus Ohio (USA);**

**The file contains technical information submitted after the application was filed and not included in this specification**

(73) Proprietor: **Rohm and Haas Company**
**Independence Mall West**
**Philadelphia, Pennsylvania 19105 (US)**

(72) Inventor: **Kowalski, Alexander**
**2445 Edgecomb Avenue**
**Glenside, PA (US)**
Inventor: **Vogel, Martin**
**550 Pine Tree Road**
**Jenkintown, PA (US)**
Inventor: **Blankenship, Robert Mitchell**
**128 County Line Road**
**Lansdale, PA 19446 (US)**

(74) Representative: **Angell, David Whilton et al**
**Rohm and Haas Company Patent Department**
**Chesterfield House Bloomsbury Way**
**London WC1A 2TP (GB)**

(56) References cited:
**CHEMICAL ABSTRACTS, vol. 83, no. 10, 8th September 1975, page 147, no. 81541r, Columbus Ohio (USA);**

## Description

This invention is concerned with polymer made by sequential emulsion polymerization and containing acid core polymer at least partially encased in sheath polymer that is permeable to volatile base to swell the core. The polymers may be used as thickeners.

Microvoid-containing polymer particles serving as hiding or opacifying agents in coating and molding compositions are known. Organic solvents and blowing agents are used predominantly to prepare such polymers.

Kreider US—A—3819542, though containing no disclosure of the production of microvoid-containing polymer particles to serve as opacifying agents in coating compositions, is of background interest to show the use of organic solvents in a latex coating composition to produce a cellular film on drying. More specifically Krieder uses a mixture of a primary organic solvent, such as xylene, immiscible with the aqueous phase of the latex coating composition and a secondary organic solvent, such as propylene glycol, at least partially water-miscible and having lesser volatility and lesser solvating capacity for the polymer in the latex than the primary solvent. Upon evaporation of the primary solvent, a cellular film is obtained, the secondary solvent increasing the opacification.

Kurth et al. US—A—3875099 discloses preparation of sequential acrylic polymers containing 0.5—2.5% of an alpha, beta-unsaturated carboxylic acid. The bulk of the acid is introduced in the early portion of the polymerization. Of the 11 examples, only Ex. 1 superficially resembles the film-forming thickener of the present invention. There is about 0.5% acid monomer over all, the first stage monomers containing about 13% methacrylic acid. The core/sheath weight ratio is in the neighborhood of 1/25. The core and sheath monomers are basically the same in this example (about 50:50 butyl acrylate methyl methacrylate), but the acid in the core confers a $T_i$ of about 30—35°C, the sheath having a calculated $T_i$ of about 5°—10°C. Example 1 of Kurth et al. involves the use of a large amount of surfactant and a small amount of peroxy initiator, both of which are believed to normally result in extremely small latex particles. In our experience, this recipe would be expected to give core particles of about 0.04—0.05 micrometer average diameter, with the overall core-shell particle diameter being about 0.1—0.15 micrometer. The soft core, the small particle size, and the high temperature polymerization each may contribute to incomplete encapsulation. As shown by a comparative example herein below, the first stage of the Kurth et al. Ex. 1 is not adequately encapsulated.

Fantl et al, US—A—3401134 discloses that cellulose ethers and water-soluble gums have been used to thicken aqueous coating compositions based on various polymer latices to thicken the composition for application, as by brushing, rolling, or the like. Fantl et al disclose that improved aqueous polymer dispersions are obtained by delaying the incorporation of acid monomer into the copolymer until at least 70% of the other monomers have been polymerized, asserting that the acid mer units are thereby oriented to the surface of the polymer particles and the acid copolymer thus obtained has the property of increasing in viscosity when the addition of a base, such as ammonia, raises the pH to 8 to 12.

JA—A—7472382 discloses the production of hydroxamic acid-type insoluble cation exchange resins by treating crosslinked polymers having hydrolyzable carboxylate ester side chains with hydroxylamine salts. For example, poly(acrylic acid) is dissolved in water before polymerizing a butyl acrylate/divinyl benzene copolymer. The copolymer is then treated with hydroxylamine hydrochloride. Poly(acrylic acid) is commonly used as a stabilizer in ion exchange resin manufacture and stays in the aqueous medium throughout. The process, unlike the present invention, does not use core emulsion particles and does not give an encapsulated core type of product.

US—A—3745196 is concerned with acrylic elastomers which can be vulcanized to produce elastic polymers having rubbery physical properties which permits their use as automotive gaskets, transmission seals and the like. This US patent requires more soft polymer than is permitted in the present invention. For example, butyl acrylate is stated to be a group I monomer and must be present in an amount of at least 45% as opposed to the present invention wherein at most 40% of butyl acrylate is used.

US—A—3454516 discloses dyadic interpolymers useful as film-forming components in coating compositions. This US patent is concerned with soft first stage polymers into which a hard second stage is infused or dissolved. There is no encapsulation as required by, and the order of polymerization (soft-hard) is the reverse of, the present invention.

US—A—4151143 is concerned with a two-stage method for producing surfactant-free polymer emulsion products for use as film coatings for metal and glass surfaces. In the method the first stage product is a bulk polymerized product unlike the emulsion polymerized product of the present invention.

US—A—3502604 discloses impact resistant resin compositions having a crosslinked core which may contain up to 20% of acid monomer, and having a rigid second stage as opposed to the film-forming second stage required in the present invention.

JA—A—7504397 discloses the preparation of aqueous coating material having good freeze-melt- and mechanical stability, and alkali resistance. In contrast to the present invention, a swellable core is not produced as the acid or hydrophilic monomer level is too low, for example 3%. Additionally, in contrast to the present invention, the shell:core ratio does not have a minimum of 3:1.

In accordance with the present invention there is provided a process for making an aqueous dispersion of water insoluble core/sheath polymer particles comprising sequentially emulsion polymerizing, at a temperature of from 10° to 100°C in an aqueous medium containing free radical initiator, (a) at least one core monomer charge comprising monoethylenically unsaturated monomer having a group of the formula —HC=C<, at least one of such monomer having carboxylic acid group(s), the monomer being emulsified in the medium, the monomer comprising, as hydrophilic monomer, (i) non-acid monomer copolymerized with at least 5% of carboxylic acid monomer or (ii) 15—100% of acid monomer when no other hydrophilic monomer is present, based on the weight of the monomer utilized to prepare the core polymer particles, the core monomer having no more than 40% of butyl acrylate or no more than an amount of an equivalent monomer which would give a comparable $T_i$ when using the same comonomer combination; to thereby form dispersed core polymer particles having an average diameter of 0.05 to 1 micrometer; and (b) then adding to the polymer dispersion resulting from (a) at least one monomer charge comprising monoethylenically unsaturated sheath monomer having no ionizable group to form at least one sheath polymer on the core particles, any monoethylenically unsaturated carboxylic acid in the sheath monomer being present in an amount of no more than 10% by weight of the total sheath monomer, the proportion of carboxylic acid in the sheath monomer not exceeding 1/3 the proportion thereof in the core monomer, the core/sheath particles having an average diameter, before neutralization and swelling, of 0.07 to 4.5 micrometers, the relative amounts of core-forming monomer and sheath-forming monomer being such that the ratio of the weight of the core to the weight of the total polymer in the resulting dispersed particles in unswollen condition is 1:4 to 1:100, said sheath being permeable at 20°C to aqueous volatile base selected from ammonia and amines, and substantially impermeable at 20°C to fixed or permanent bases including sodium, potassium, calcium or magnesium hydroxide, the exterior sheath having a $T_i$ of below 50°C, the particles being film-forming and the encapsulation being such as to give a titer of said polymerized acid with alkali metal hydroxide for less than 50% thereof thereby indicating more than 50% encapsulation; (c) neutralizing with ammonia or amine so as to swell said core.

The present invention therefore applies sequential emulsion polymerization in an aqueous medium to the formation of an aqueous dispersion of water-insoluble hetero-polymer particles comprising (1) an ionic core polymer containing ionizable acid groups making the core swellable, e.g. to at least twice its volume, by the action of a swelling agent consisting essentially of an aqueous liquid or a gaseous medium containing a volatile base to at least partially neutralize (to a pH of at least about 6 to 10) the acid core polymer and thereby to cause swelling by hydration thereof and (2) a sheath polymer on the core, the sheath being permable to the swelling agent. The composition of sheath polymer is such as to render it substantially non-permeable at 20°C to fixed or permanent bases, such as sodium, potassium, calcium or magnesium hydroxide. However, the permeability at 20°C to volatile base, such as ammonia or lower aliphatic amine, e.g., triethylamine, diethanolamine, triethanolamine or morpholine allows swelling of the acid core polymer by such volatile bases in aqueous or gaseous media, to enable films to be deposited from aqueous coating compositions which comprise a volatile base-swollen core of the core/sheath polymer, and which, upon drying and resultant (at least partial) removal by volatilization of the base, are not damaged by any permanent base present in the substrate coated or in solutions used later for cleaning the films.

In another aspect of the invention there is provided multi-stage polymer obtainable by the above-described process having at least one core stage polymerized from monomer comprising carboxylic acid monomer and at least one subsequent sheath stage encapsulating said acid-containing stage(s) as evidenced by titration of said polymerized acid with aqueous alkali metal hydroxide providing a titer for less than 50% of the acid, thereby indicating more than 50% encapsulation, said acid stage(s) containing sufficient acid groups to render the core swellable upon neutralization with volatile base to at least twice its volume and said encapsulating stage(s) being permeable to said base, the exterior sheath having a $T_i$ of below 50°C and the particles being film-forming. Preferably the degree of encapsulation is at least 85%, e.g. as evidenced by titration with aqueous potassium hydroxide. The polymer may be in swollen or unswollen form. Such polymer may have, as a further feature, any of the characteristics of polymers produced by the process of the invention.

The invention also extends to the use of the above-described polymers in coating and/or impregnating compositions. Such a composition may contain one or more of the conventional coating composition additives, such as pigment mentioned herein.

The terms "core", "sheath" and "core/sheath polymer" are used herein for convenient description of the polymer particles. The particles may not always have the precise structure implied by these terms.

The term "sequentially emulsion polymerized" or "sequentially emulsion produced" refers to polymers (which term includes copolymers as well as homopolymers) which are prepared in aqueous medium by an emulsion polymerization process wherein the dispersed polymer particles of a preformed latex or "seed" polymer in the aqueous medium are increased in size by deposition thereon of polymerized product of one or more successive monomer charges introduced into the medium containing dispersed particles of the preformed latex in one or more subsequent stages. When there is no additional emulsifier (or surfactant) introduced with the subsequent monomer charges, essentially no additional micelles are formed during the subsequent stages of polymerization and practically all of the monomer charges added later polymerize onto the latex polymer particles present at the time of charging and the resulting polymer product may appropriately be called a "unimodal" sequentially polymerized heteropolymer. However, a "polymodal", for instance a "dimodal", "trimodal", or "multimodal" heteropolymer may be obtained by introducing additional emulsifier or surfactant with one (to produce a dimodal) or more (to produce tri-, tetramodal, etc.) of the subsequent charges. In such instances, the monomer charge accompanied by additional surfactant is partly polymerized on the dispersed polymer particles already present and partly polymerized on the additional micelles created by the additional surfactant, the relative proportion of the monomer charge contributing to the two effects being generally related to the amount of surfactant added with the monomer charge.

In this type of polymerization, all of the monomer of each succeeding stage or phase is attached to and intimately associated with the dispersed particles resulting from the immediately preceding stage or phase when no additional surfactant is added in the subsequent stages. When additional micelle-forming surfactant is added in a particular monomer charge, part of the monomer in the charge is so attached and intimately associated with the polymer particles present in the system at the time of monomer/surfactant addition and part produces additional dispersed particles, yielding a multimodal heteropolymer. Although the exact nature of this attachment is not known, and while it may be chemical or physical or both, the sequentially prepared polymers or copolymers of the present invention are characterized by and or made by a process in which the total particle content is substantially predetermined, in terms of number, by the use of a preformed latex to provide an initial dispersed particle content and either (1) avoiding the addition of surfactant with the subsequent monomer charges whereby a monomodal or unimodal heteropolymer is obtained containing essentially the same number of dispersed polymer particles as the initial latex or (2) incorporating a limited amount of additional emulsifying surfactant in one or more of the subsequently added monomer charges to produce a multimodal or polymodal polymer dispersion in which the number of dispersed polymer particles derived by attachment or intimate association with the dispersed polymer particles of the initial or seed latex is the essential or significant mode by virtue of its "large-size" particles and the dispersed polymer particles produced on other micelles formed by including surfactant in one or more of the subsequent monomer charges provide a second and/or third, and so on mode, all such additional modes, whether one, two, three, or more being relatively insignificant with respect to the essential mode. In multimodal polymers made in accordance with the present invention, the essential or "large-size particle" mode constitutes at least about 25% of the total amount of dispersed polymer particles in terms of weight. A preferred embodiment of multimodal product is a bimodal polymer in which the essential or significant mode derived from the dispersed particles of initial, preformed seed latex constitutes at least about 75% to 85% of the total weight. The essential mode may simply be referred to as the "main" mode regardless of the proportion of such mode in multimodal dispersion because it is the significant mode, but in the preferred embodiment the essential mode or main mode is also the predominant mode. The first stage of monomer charge containing additional surfactant to prepare a multimodal product may be at the time of any of the successive monomer charges after at least about 10% to 50% by weight of the total monomer or monomers to be polymerized on the particles of the initial preformed latex have been so polymerized.

In the multistage sequential emulsion polymerization with which the present invention is concerned, the term "seed" polymer is used to refer to an aqueous emulsion polymer dispersion which may be the initially-formed dispersion, that is the product of a single stage of emulsion polymerization or it may be the emulsion polymer dispersion obtained at the end of any subsequent stage except the final stage of the sequential polymerization. Thus, an alkali-swellable polymer which is herein intended to be provided with a sheath by one or more subsequent stages of emulsion polymerization may itself be termed a seed polymer for the next stage wherein the sheath-forming polymer is deposited on such seed polymer particles.

The core polymer is the product of aqueous emulsion polymerization of at least one monomer charge comprising monoethylenically unsaturated monomer containing a group of the formula —HC=C< and carboxylic acid group(s). Suitable acid monomers include acrylic acid, methacrylic acid, (meth)acryloxypropionic acid, itaconic acid, aconitic acid, maleic acid or anhydride, fumaric acid, crotonic acid, monomethyl maleate, monomethyl fumarate, and monomethyl itaconate.

The core polymer may be obtained by the emulsion homopolymerization of such an acid monomer or by copolymerization of two or more acid monomers. However, in preferred embodiments, an acid monomer or a mixture of acid monomers is copolymerized with one or more ethylenically unsaturated monomers of non-ionic character (that is, having no ionizable group) having one or more ethylenic unsaturated groups of the formula $H_2C=C<$.

The preferred acid monomers that may be used in providing an alkali-swellable core are acrylic acid and methacrylic acid and mixtures thereof; other preferred acid monomers that may be used include acryloxypropionic acid, methacryloxypropionic acid, acryloxyacetic acid, methacryloxyacetic acid and monomethyl acid itaconate.

Examples of nonionic monoethylenically unsaturated monomers include styrene, vinyltoluene, ethylene, vinyl acetate, vinyl chloride, vinylidene chloride, acrylonitrile, (meth)acrylamide, various $(C_1—C_{20})$alkyl or $(C_3—C_{20})$alkenyl esters of (meth)acrylic acid, (The expression (meth)acrylic acid is intended to serve as a generic expression embracing both acrylic acid and methacrylic acid), e.g., methyl methacrylate, methyl acrylate, ethyl (meth)acrylate, butyl (meth)acrylate, 2-ethylhexyl (meth)acrylate, benzyl (meth)acrylate, lauryl (meth)acrylate, oleyl (meth)acrylate, palmityl (meth)acrylate and stearyl (meth)acrylate. In general, core copolymers containing at least about 5%, preferably at least 10%, by weight of acid mers have practical swellability for the purposes of the present invention but there may be

4

# 0 073 529

instances wherein, because of the hydrophobicity of certain comonomers or combinations thereof in conjunction with the hydrophobic/hydrophilic balance of a particular acid monomer the copolymer may require somewhat less than 5 weight percent of acid monomer or considerably more than 5 weight percent thereof, and in the latter instance, a preferred proportion of acid monomer is at least 10 weight percent based on the total weight of core-producing monomer mixture. As may be seen by the reference to homopolymerization of an acid monomer core the invention includes a core which contains 100% of the addition polymerizable carboxylic acid. A preferred maximum quantity of acid monomer is about 70% of the total core monomers, by weight, a preferred minimum 15%.

The core polymers may, and preferably does, comprise as one component thereof a small amount of a polyethylenically unsaturated monomer, such as ethylene glycol di(meth)acrylate, allyl (meth)acrylate, 1,3-butane-diol di(meth)acrylate, diethylene glycol di(meth)acrylate, trimethylol propane trimethacrylate or divinyl benzene, the proportion thereof being in the range of 0.1% to 20%, preferably 0.1% to 3%, by weight, based on the total monomer weight of the core, the amount used generally being approximately directly proportional to the amount of acid monomer used. Butadiene is exception in that it often functions as a monoethylenically unsaturated monomer especially in mixtures with styrene so the amount of butadiene, if used, may be as much as 30 to 60 percent by weight of the total core monomer weight.

While the core may be made in a single stage or step of the sequential polymerization and the sheath may be the product of a single sequential stage or step following the core stage, nevertheless, the making of the core component may involve a plurality of steps in sequence followed by the making of the sheath which may involve a series of sequential steps as well.

Thus, the first stage of emulsion polymerization in the process of the present invention may be the preparation of a seed polymer containing small dispersed polymer particles insoluble in the aqueous emulsion polymerization medium. This seed polymer may or may not contain any acid component but provides particles of minute size which form the nuclei on which the core polymer of acid monomer, with or without nonionic comonomer(s), is formed.

In one embodiment the formation of dispersed core particles is a multistage process involving first, the preparation of seed polymer from monoethylenically unsaturated monomer which may or may not comprise monomer containing an acid group, and a second stage polymerization on the seed particles of ethylenically unsaturated monomer comprising

(1) 5 to 100 weight% of carboxylic acid,
(2) 0 to 95 weight% of monoethylenically unsaturated monomer lacking an ionizable group, and
(3) 0 to 20 weight % of polyethylenically unsaturated monomer,

using conditions to obtain core polymer particles having an average diameter of 0.1 to 0.5 micrometer in unswollen condition, and the subsequently polymerized core/sheath particles having an overall size of up to 2.0 micrometers in unswollen condition.

In such embodiment, the acid may be acrylic acid and/or methacrylic acid and the core/sheath particles may have an average diameter of from 0.2 to 2.0 micrometers in unswollen condition and 0.1% to 3% of polyunsaturated crosslinking monomer may be included in the core monomer mixture.

As is common to aqueous emulsion polymers, there is used a water-soluble, free-radical initiator, such as hydrogen peroxide, tert-butyl peroxide, or an alkali metal (sodium, potassium or lithium) or ammonium persulfate or a mixture of such an initiator with a reducing agent, such as a sulfite, more specifically an alkali metal metabisulfite, hydrosulfite, or hyposulfite, or sodium formaldehyde sulfoxylate, to form a redox system. The amount of initiator may be from 0.01 to 2% by weight of the monomer charged and in a redox system, a corresponding range (0.01 to about 2%) of reducing agent may be used. The temperature is in the range of 10°C to 100°C. In the case of the persulfate systems, the temperature is preferably in the range of 60° to 90°C. In the redox system, the temperature is preferably in the range of 30° to 70°C, preferably below about 60°C, more preferably in the range of 30°—45°C. The proportion of emulsifier may be zero, in the situation wherein a persulfate initiator is used, to about 0.3 weight percent, based on the weight of monomer charged to the first stage of polymerization. By carrying out the emulsion polymerization while maintaining low levels of emulsifier, the subsequent stages of polymer-formation deposit the most-recently formed polymer on the existing dispersed polymer particles resulting from the preceding step or stage. As a general rule, the amount of emulsifier should be kept below that corresponding to the critical micelle concentration for a particular monomer system, but while this limitation is preferable and produces a unimodal product, it has been found that in some systems the critical micelle concentration of the emulsifier may be exceeded somewhat without the formation of an objectionable or excessive number of dispersed micelles or particles. It is for the purpose of controlling the number of micelles during the various stages of polymerization so that the deposition of the subsequently formed polymer in each stage occurs upon the dispersed micelles or particles formed in the previous stages, that the concentration of emulsifier is kept low. However, as pointed out hereinabove, polymodal products may be obtained by including an emulsifier or surfactant in one or more of the later monomer charges.

Any nonionic or anionic emulsifier may be used, either alone or together. Examples of the nonionic type of emulsifier include *tert*-octylphenoxyethylpoly(39)-ethoxyethanol, and nonylphenoxy-ethylpoly(40)ethoxyethanol. Examples of anionic emulsifiers include sodium lauryl sulfate, sodium dodecyl benzene sulfonate, *tert*octylphenoxyethoxypoly(39)ethoxyethyl sulfate, sodium salt.

5

The molecular weight of the polymer formed in a given stage may range from 100,000, or lower if a chain transfer agent is used, to several million viscosity average. When 0.1 to 20 weight% of a polyethylenically unsaturated monomer mentioned hereinbefore is used in making the acid polymer, the molecular weight is increased whether or not crosslinking occurs. The use of the polyethylenically unsaturated monomer reduces the tendency of the core polymer to dissolve when the multistage polymer is treated with a swellant for the core. If it is desired to produce an acid polymer having a molecular weight in the lower part of the range, such as from 500,000 down to as low as about 20,000, it is frequently most practical to do so by avoiding the polyethylenically unsaturated monomers and using a chain transfer agent instead, such as 0.05 to 2% or more thereof, examples being a lower alkyl mercaptan, such as sec-butyl mercaptan.

The acid-containing core polymer, whether obtained by a single stage process or a process involving several stages, has an average size of 0.05 to 1.0, preferably 0.1 to 0.5, more preferably 0.2 to 0.5 micrometer diameter in unswollen condition. If the core is obtained from a seed polymer, whether or not the latter contains acid groups or mers, the seed polymer may have an average size in the range of 0.03 to 0.2 micrometer diameter.

After the acid core is obtained, a subsequent stage or stages of emulsion polymerization is effected to form a sheath polymer on the acid core polymer particles or micelles. This may be performed in the same reaction vessel in which the formation of the core was accomplished or the reaction medium containing the dispersed core particles may be transferred to another reaction container. It is generally unnecessary to add emulsifier unless a polymodal product is desired, but in certain monomer/emulsifier systems for forming the sheath, the tendency to produce gum or coagulum in the reaction medium may be reduced or prevented by the addition of 0.05 to 0.5% by weight, based on sheath-forming monomer weight, of emulsifier without detriment to the deposition of the polymer formed on the previously formed core particles.

The monomers used to form the sheath polymer on the acid core particles may be any of the nonionic monoethylenically unsaturated comonomers mentioned hereinbefore for the making of the core. The monomers used and the relative proportions thereof in any copolymers formed should be such that the sheath thereby formed is permeable to an aqueous or gaseous volatile basic swellant for the acid core but not to a permanent base. In spite of their hydrophobicity, the extremely non-polar or low-polar monomers, namely, styrene, α-methyl styrene, vinyl toluene, ethylene, vinyl chloride and vinylidene chloride are useful alone (except in the first stage of sheath formation) or in admixture with more highly polar monomers in the list, such as vinyl acetate. Monomeric mixtures for making the sheath may contain up to about 10% by weight, but preferably not over 5% by weight, of an acid monomer, such as one of the monomeric acids mentioned hereinbefore for making the core. However, the proportion of acid in the sheath polymer should not exceed one-third the proportion thereof in the core polymer. The content of acid monomer serves either or both of two functions, namely stabilization of the final sequential polymer dispersion and assuring permeability of the sheath to a volatile base swellant for the core.

The amount of polymer deposited to form sheath polymer is generally such as to provide an overall size of the multistage polymer particle of 0.07 to 4.5 micrometers, preferably 0.1 to 3.5 micrometers, more preferably 0.2 to 2.0 micrometers, in unswollen condition (that is, before any neutralization to raise the pH to about 6 or higher) whether the sheath polymer is formed in a single stage or in a plurality of stages. In unswollen state, the ratio of core weight to the total weight on average is from 1:4 to 1:100, preferably from 1:4 to 1:50, which on the basis of core: sheath ratio is 1:3 to 1:99, preferably 1:3 to 1:49.

The multistage heterogeneous particulate polymer containing the acid core is swollen when the particles are subjected to an aqueous basic swellant that permeates the sheath and expands the core, which expansion may involve partial merging of the outer periphery of the core into the pores of the inner periphery of the sheath and also partial enlargement or bulging of the sheath and the entire particle overall. Suitable swelling agents for acid-containing cores are ammonia, ammonium hydroxide, or a volatile lower aliphatic amine, such as trimethylamine and triethylamine.

The monomer or monomers of the sheath are selected to produce a sheath polymer having a low glass temperature, that is a $T_i$ of below 50°C, such as −40° to +23°C. The polymer particles are especially useful as a thickener for aqueous media, such as various coating compositions including water-base paints to be applied at ambient temperatures with at least partial neutralization by adjustment, whenever needed, to a pH of at least 6 to 10 with a volatile base, and in this situation it is especially useful when it is incorporated, in swollen or unswollen condition (and whenever needed, with subsequent adjustment of pH to raise it to at least 6, and up to about 10 with a volatile base), into the composition as part of a binder. $T_i$ is the apparent second order transition temperature of inflection temperature which is found by plotting the modulus of rigidity against temperature. A convenient method for determining modulus of rigidity and transition temperature is described by I. Williamson, British Plastics 23, 87—90, 102 (September 1950). The $T_i$ value here used is that determined at 300 kg/cm$^2$.

As indicated elsewhere herein, the core is preferably relatively hard, as indicated by calculated or measured core $T_i$, or the core polymer is crosslinked by a polyunsaturated monomer. A useful limit for hardness (or softness) of the core is that less than 40% of butyl acrylate ($T_i$ of between −50° and −55°C) is used, or no more than an amount of an equivalent monomer is used which would give a comparable $T_i$ when using the same comonomer combination. Thus, for a copolymer of 40% butyl acrylate, and 60%

6

methyl methacrylate, the calculated $T_i$ is about 20°C. When ethyl acrylate is substituted for butyl acrylate, a copolymer of 60% ethyl acrylate and 40% methyl methacrylate gives a calculated $T_i$ of about 17°C. Of course, the acid monomer confers a higher $T_i$. When using different monomer compositions, particularly with crosslinkers, this rule-of-thumb is not always strictly applicable. Nevertheless, it is a useful guideline.

The heteropolymer dispersions of the present invention are useful in aqueous coating compositions, such as water base paints based on vinyl addition polymer latices, including the acid-containing acrylic emulsion copolymer dispersions of the Conn et al US—A—2795564, and the polyvinyl acetate, butadiene-styrene latices mentioned as part of the prior art in Fantl et al. The heteropolymer dispersions of the present invention may be used as the entire binder or a part thereof in such compositions which are commonly made into paints and other water-based coating compositions having sufficient volatile base therein to assure a pH therein of at least about 6, preferably 7.5 to 10, to thereby assure at least partial neutralization of the acid heteropolymer dispersed particles therein. In the production of the acrylic polymer latices, it has been the practice to add a cellulose ether, such as hydroxyethyl cellulose, to stabilize the emulsion polymer dispersion and to aid in the thickening of the coating composition to suitable viscosity for application by brush or roller. Since such ethers are water-soluble, the amount thereof added must either be carefully limited or the coating films become excessively water-sensitive.

The use of the heteropolymer dispersions of the present invention as the binder or as a part of it in such compositions has been found to reduce the need for a cellulose ether and to provide a greater high-shear (i.e. "so-called" ICI) viscosity along with a practical level of low-shear viscosity, i.e. viscosity "at rest", so that settling while standing, as in storage, is reasonably retarded. The increase in high-shear viscosity assures greater coverage during application and the reduced amount of water-soluble cellulose ether provides greater resistance to moisture.

By applying such coating compositions containing a heteropolymer dispersion in which the $T_i$ of the sheath is below or about the ambient temperature of application, the core/sheath particles form a continuous, coalesced film on drying, as explained in the Conn et al patent. If the sole binder of such composition is the heteropolymer dispersion of the present invention in which the $T_i$ of the sheath is above the temperature of application, the layer of coating dries to a layer of uncoalesced polymer particles. In this case, a coalesced film may be obtained by subjecting the coating layer, during or shortly after drying, to a temperature above the $T_i$ of the binder. The heteropolymer dispersion of the present invention may be mixed with a predominant amount of another polymer dispersion, such as an acrylic polymer of the Conn et al patent having a $T_i$ below the ambient temperature of application whereas the sheath of the heteropolymer has a $T_i$ above the ambient temperature. In this instance the heteropolymer serves as a rheology modifier during application and may provide opacifying action by formation of microvoids in the cores of the heteropolymer dispersion.

The heteropolymer dispersion of particles having an alkali-swellable core and a sheath that is film-forming under the conditions of application, preferably having a $T_i$ of 25°C or below in the case of water-base paints to be applied at room temperature or ambient temperature, can be formulated into paints with substantially improved application performance over state-of-the-art paints. Using state-of-the-art latex binders, one must use significant quantities of water-soluble or highly water-swollen thickeners to impart the necessary rheology to the paint system. Particularly in lower quality paint formulations where binder and pigment are reduced to lower the paint cost per gallon, an exceptionally large quantity of thickener is required and it becomes difficult to achieve the desired paint rheology properties under any conditions.

The heteropolymers having an alkali-swellable core with a film-forming sheath, by their nature absorb water into the center of the particle when they are contacted with ammonia or an amine. The water absorbed into the center of the emulsion polymer particle is essentially removed from the paint system and may be thought of as "hidden" within the polymer particles. When paints are formulated with such water-swollen particles, substantially less thickener is required since only the water outside the particles must be thickened. As a result, paints may be formulated with excellent rheological properties without the use of excessive levels of water-soluble or -swellable thickeners. Since these water-soluble or water-swellable thickeners detract from the water- and/or alkali-resistance of the paint film, improvement is obtained in these properties of the resultant paint film.

The film-forming thickeners of the invention, which may be referred to as encapsulated alkali swellable polymer dispersions (EASPs) do not give high viscosity at low shear (Brookfield) when neutralized, particularly with the particle sizes of 0.2 or 0.3 to 1 micrometer before swelling. Neutralization and swelling causes an increase in volume and size of the dispersed particles, decreases the volume of the continuous phase, thus giving particle crowding, increased high shear viscosity (ICI viscosity) and finally dilatency. Low shear viscosity will increase somewhat due to decrease of continuous phase but is not the major effect. The dispersion goes dilatent before low shear viscosity becomes significant (greater than $1 Ns/m^2$ (1000 cps)). This effect is also a function of particle size. Swelling of small particle dispersions, 0.15 micrometer diameter and under, as in the Kurth et al. patent, may be expected to give high low shear viscosity, incomplete encapsulation and exposure of the acid to the continuous phase probably being the reason.

The high shear viscosity development due to increased volume solids is useful in paints by increasing film build.

Encapsulated alkali swellable cores when properly encapsulated do not titrate with alkali metal bases (titration under normal analytical conditions of about 1 hour and at room temperature). Upon exposure to alkali metal basis (NaOH, KOH) at high pH such as 9.5 for long periods (over 1 day) or at high temperatures, some of the core acid may be titrated, particularly with a soft-sheath. The EASP's are, however, readily titrated by $NH_4OH$ or organic bases in a much shorter time at room temperature and swell, taking up water.

Cases which are not completely encapsulated (e.g., Kurth et al. US—A—3875099) appear to cause aqueous phase thickening (probably by solution of the polymer), high low shear (Brookfield) viscosity, and flocculation of the dispersion.

The encapsulated swellable polymer provides the capability of increasing dispersion volume solids by neutralization with $NH_4OH$ and gives a film or coating (when dry) in which the encapsulated acid is not available to attack by alkali metal bases as from cementitious substrates or cleaning solutions.

In addition to the importance of $T_i$, the MFT of the film-forming EASP's is important. MFT is the minimum film-forming temperature of the latex particles as the coating is dried, and is determined by the method described in Resin Review, Volume 16, No. 2 (1966). This is influenced not only by the $T_i$ of the addition copolymer, but by polymer composition and other ingredients such as plasticizers or coalescing agents, if used, and their amounts, as well as by the plasticizing effect of water. Such additives to paints thus make shells, having a $T_i$ of greater than ambient temperature, film-forming at the desired temperature.

In the following examples which are illustrative of the invention, the parts and percentages are by weight and temperatures are in degrees Celsius, unless otherwise stated.

Example 0
Emulsion polymerization of seed polymers

(a) A 5-liter flask equipped with a paddle stirrer, thermometer, nitrogen inlet and reflux condenser is used. Deionized water (2900 g) and 5.5 g of sodium dodecylbenzene sulfonate are heated in the flask to 78°C under a nitrogen atmosphere with stirring. A monomer emulsion is prepared from 266 g of deionized water, 0.40 g of sodium dodecylbenzene sulfonate, 416 g of butyl acrylate, 374 g of methyl methacrylate and 10.4 g of methacrylic acid. Fifty grams of monomer emulsion is added to the flask and then 3.0 g of ammonium persulfate dissolved in 10 $cm^3$ of water. Fifteen minutes later, a gradual feed of the remaining monomer emulsion at 16 g/min is begun. The temperature is allowed to rise to 85°C and is maintained there throughout the monomer addition. Fifteen minutes after the monomer addition is completed, the reaction mixture is cooled. At 55°C, 1.0 $cm^3$ of t-butyl hydroperoxide (70%) and 0.50 g of sodium formaldehyde sulfoxylate dissolved in 20 g of water are added. At 25°C, 10 g of 28% aqueous ammonia is added. The product is filtered through a 100-mesh screen and has pH 9.5, 19.6% total solids and average particle diameter 0.06 micrometer (light scatter).

b) A larger seed polymer dispersion is prepared by the same procedure, only the amount of sodium dodecylbenzene sulfonate in the initial charge to the flask is reduced to 2.0 g. The product has a pH of 9.4, 19.5% total solids, and an average particle diameter of 0.095 micrometer.

Example 1

A 5-liter round-bottomed flask is equipped with paddle stirrer, thermometer, nitrogen inlet and reflux condenser. To 2115 g of deionized water heated to 84°C in the flask under a nitrogen atmosphere there is added 4.2 g of sodium persulfate dissolved in 25 g of water followed by 62 g of an acrylic seed polymer dispersion of part b) of Example 0 (19.5% solids, average particle diameter 0.095 micrometer). A monomer emulsion consisting of 235 g of deionized water, 0.8 g of sodium dodecylbenzene sulfonate, 490 g of methyl methacrylate, 210 g of methacrylic acid and 3.5 g of ethylene glycol diacrylate is added to the kettle over a 3-hour period at 85°C. After the completion of the monomer feed, the dispersion is held at 85°C for 30 minutes, cooled to 25°C and filtered to remove coagulum. The filtered dispersion has a pH 2.3, 22.4% solids content and an average particle diameter of 0.35 micrometer. A dilute sample of the dispersion is neutralized to pH 10 with ammonia. Upon examination with an optical microscope, the average particle diameter is found to be 0.8 micrometer corresponding to a swelling ratio of around 12 by volume.

Example 2
Soft vinyl acetate sheath

A portion of unneutralized alkali-swellable polymer dispersion prepared as Example 1, but of 0.30 micrometer diameter and 37.4% solids (28 parts of dispersion, 10.5 parts of solid polymer), 80 parts of water, 0.6 parts of sodium persulfate dissolved in 50 parts of water, and 5.0 parts of 0.1% aqueous ferrous sulfate heptahydrate were stirred in a glass reaction vessel under a nitrogen atmosphere at 60°C. A monomer emulsion (40 parts of water, 0.07 parts of sodium dodecylbenzene sulfonate, 160 parts of vinyl acetate, and 40 parts of butyl acrylate) was added over a 90 min period along with co-feeds of 0.2 parts of sodium persulfate dissolved in 20 parts of water and 0.6 parts of sodium bisulfite dissolved in 20 parts of water while maintaining the temperature at 60°C. The final particle size was 0.60 micrometer. None of the core carboxylic acid could be titrated with 0.5N potassium hydroxide.

Example 3

A portion of unneutralized alkali-swellable polymer dispersion prepared as Example 1 but of 0.26

# 0 073 529

micrometer diameter and 10.21% solids (87 parts of dispersion, 8.86 parts of solid polymer) is stirred in a glass reaction vessel and heated to 60°C. Then 0.10 part of a 23% solution of sodium dodecyl benzene-sulfonate, 0.068 part sodium persulfate in 2 parts water and 1 part of a 0.1% solution of $FeSO_4 \cdot 7H_2O$ are added. A monomer emulsion of the following composition is added over a period of 3 hours and 20 minutes while maintaining the temperature at 60°C.

| | |
|---|---|
| Water | 20 parts |
| Sodium dodecyl benzene sulfonate | 0.3 parts 23% solution |
| Butyl acrylate | 72 |
| Methyl methacrylate | 76 |
| Methacrylic acid | 1.95 |
| Total | 170.25 parts |

Concurrently with the monomer emulsion additional catalysts consisting of 0.4 part sodium persulfate in 10 parts water and 0.28 part sodium bisulfite in 10 parts water are gradually added.

Following preparation of the emulsion polymer an aqueous solution of thickener may be added to provide stability and adjust the solids level to about 50%. The particle size of the unneutralized emulsion polymer is 0.67 micrometer. Upon neutralization of a diluted sample of the product with ammonia the particle diameter increases to about 0.80 micrometer due to uptake of water.

| | |
|---|---|
| Calculated unswollen particle diameter | 0.67 micrometer |
| Calculated swollen particle diameter | 0.78 micron |

Assuming core swelling to 10× initial volume with $H_2O$.

## Example 4

The procedure of Example 3 is repeated except 79.7 parts (8.233 parts solid polymer) of a 0.17 micrometer diameter alkali-swellable polymer dispersion prepared as in Example 1 is used in place of the 0.26 micrometer diameter dispersion used in Example 3. After heating to 60°C, there is added 0.17 parts of a 23% solution of sodium dodecylbenzene sulfonate. 10 parts water is added to dilute. Other ingredients and process are like those in Example 3.

| | |
|---|---|
| Calculated unswollen particle diameter | 0.43 micrometer |
| Found unswollen particle diameter | 0.43 micrometer |

Various factors affect the swelling (water absorption) of film-forming EASP's.

In one method of determining water absorption of ammonium-neutralized film-forming EASP's, the EASP is diluted to 20% solids and neutralized to a pH of 9.5 with ammonium hydroxide and exposed to the conditions specified in the tables and text which follow. A 35 g sample is then placed on a Sorvall Superspeed Centrifuge for two hours at 14,000 RPM. The supernatant is poured off and its weight is recorded. A control sample is run without neutralization in an identical manner to determine the amount of water that is trapped in interstitial spaces between the particles. (This is used as an approximation since interstitial water in the swollen samples will be slightly greater). From these two supernatant weights, the amount of water actually taken down by the swollen particles is determined and stated as "$H_2O$/g polymer solid". The difference between the two numbers divided by the solid weight of polymer in the sample gives the corrected reading of swellability for the EASP.

EASP's containing a larger percentage of core material (higher core/shell ratios) have a greater potential for swelling. In the room temperature case, the 1/10 is approximately double that of a 1/20. Swelling increases with time up to a maximum and then decreases slightly. Heating these systems allows them to reach a swelling point quickly which is unattainable at room temperature.

Deionizing the latices with Amberlite IR-120H further improves their initial ability to swell and allows them to reach maximum swelling.

In all cases, the system containing more of a given core material with a given shell composition exhibits greater swelling (1/10>1/13.1>1/20).

## Example 5

The effect of core size on water absorption is evident. Large size cores are able to absorb a greater amount of water. However, use of large size cores may be impactical for paints, but not for other uses, since

9

they lead to excessively large particle sizes which are not currently used as paint vehicles. (A 0.32 micrometer core grows out to 0.86 micrometer as a 1/20 and to 0.69 micrometer as a 1/10). Cores smaller than 0.32 micron could not be used in this series because they do not encapsulate completely using a thermal process even though they would grow out into a more acceptable particle size region. On the other hand, redox initiation at lower temperatures (below about 60°C, e.g., at about 40°C) permits encapsulation of much smaller cores, e.g., 0.2 micrometer, or smaller.

Effect of core size on water absorption at room temp.
(g $H_2O$/g polymer solid)

| Core size[1] Micrometers | 24 h |
|---|---|
| 0.29[2] | 0.84 |
| 0.32 | 0.73 |
| 0.36 | 0.77 |
| 0.50 | 0.82 |
| 0.75 | 0.96 |

[1] 1/20 core/sheath thermal EASP's (values not corrected for interstitial water). Core composition—5 BA/10 EA/55 MMA/30 MAA//0.5 X-970, sheath 52 BA46.7 MMA/1.3 MAA.

[2] Only 50% encapsulated by titration (others are 100%). When not fully encapsulated, latices will absorb more water but other properties suffer.

Example 6

Core and sheath compositions affect swelling potential of the EASP's.

Shell or sheath composition has little effect on the water absorption of EASP's in these thermal systems. Softening of the shell tends to show a small increase in swelling potential. Harder shells encapsulate more readily than softer ones.

1/20[5] Thermal EASP's
(g $H_2O$/g polymer solid)

| Low $T_i$ monomer sheath[4] | Core | Room temperature | | |
|---|---|---|---|---|
| | | 24 h | 1 week | 2 weeks |
| 46 BA | 5/10/55/30[1] | 0.59 | 0.56 | 0.62 |
| 52 BA | " | 0.64 | 0.71 | 0.68 |
| 60 EA | " | 0.65 | 0.66 | 0.70 |
| 46 BA | 5/65/30[2] | 0.87 | 0.89 | 0.89 |
| 52 BA | " | 0.87 | 0.97 | 0.95 |
| 60 EA[3] | " | 1.05 | 1.10 | 1.13 |

[1] 5 BA/10 EA/55-MMA/30 MAA//0.5 X-970—0.29 micrometer core.
[2] 5 BA/65 MMA/30 MAA//0.5 X-970—0.29 micrometer core.
[3] Only 87% encapsulated by titration with KOH.
[4] X BA or EA/98.7—X MMA/1.3 MAA.
[5] Core/shell weight ratio.

Example 7

The core/shell ratio effect is evident. In all cases the 1/10's have a greater swelling capability than the 1/20's.

Water absorption of redox EASP's at room temperature
(g $H_2O$/g polymer solids in 24 hours)

| Wt. ratio Core/shell | Core comp.[1] | | | Water absorption | |
| --- | --- | --- | --- | --- | --- |
| | BA | EA | MMA | Neat | 7.0% Texanol[2] (on solids) |
| 1/10 | 0 | 0 | 70 | 1.03 | 1.20 |
| 1/10 | 5 | 0 | 65 | 1.22 | 1.36 |
| 1/10 | 0 | 5 | 65 | 1.30 | 1.45 |
| 1/10 | 5 | 10 | 55 | 1.38 | 1.53 |
| 1/20 | 0 | 0 | 70 | 0.65 | 0.76 |
| 1/20 | 5 | 0 | 65 | 0.63 | 0.78 |
| 1/20 | 0 | 5 | 65 | 0.70 | 0.82 |
| 1/20 | 5 | 10 | 55 | 0.67 | 0.79 |

[1] 60°C Redox process; EASP's using 0.22 micrometer core having 30% MAA; shells are 52 BA/46.7 MMA/1.3 MAA
[2] Trademark for 2,2,4-trimethyl-1,3-pentanediol monoisobutyrate, a coalescent for latex paints.

The addition of 7.0% Texanol as a coalescent causes an increase in their water absorption capabilities. The Texanol plasticizes and softens the external shell of the EASP. Softening of the shell allows an increase in water uptake since there is now less of a resisting force acting on the shell.

Example 8

Water uptake of 1/10 Redox EASP's increases as acid content of the core increases in room temperature samples. Upon heating aging for 24 hours, swelling increases except at 40% MAA where it appears to decrease. It is possible that there is an optimal acid level between 30 and 40% where room temperature and heat age swelling will be equal thereby indicating its stability to temperature changes.

For 1/20's, swelling still increases on heating at the 40% acid level. Since 1/20's have shown before that external heat increases their swelling potential, its acid stability level may be higher than 40%.

Effect of core acid[1]
(g $H_2O$/g polymer solid)

| Core/ shell | % Core acid | 24 hour room temperature | 24 hour 60°C heat age |
| --- | --- | --- | --- |
| 1/10 | 10 | 0.08 | 0.25 |
| 1/10 | 20 | 0.76 | 0.98 |
| 1/10 | 30 | 1.02 | 1.13 |
| 1/10 | 40 | 1.51 | 1.24 |
| 1/20 | 30 | 0.69 | 0.81 |
| 1/20 | 40 | 0.93 | 1.05 |

[1] 60° Redox EASP's 0.22 micrometer core, shell—52 BA/46.7 MMA/1.3 MMA, core XMAA/100—XMMA/0.5 X-970.

11

Example 9

EASP, 1 core/20 sheath—styrene in shell
1 part core—10 EA/60 MMA/30 MAA/0.5 X-970
10 parts sheath—52 BA/46.7 MMA/1.3 MAA
10 parts sheath—52 BA/46S/2MAA

An unneutralized alkali-swellable polymer dispersion prepared as in Example 1 but of 0.22 micrometer diameter, of the composition 10 parts ethyl acrylate, 60 parts methyl methacrylate, 30 parts methacrylic acid, together with 0.5 part butanediol dimethacrylate, and having 14.73% T.S. (total solids; 106.5 parts of dispersion, 15.7 parts solid polymer) is added to 70 parts of water in a glass reaction vessel, stirred and heated to 60°C. Then 0.08 part of a 23% solution of sodium dodecyl benzene sulfonate, 0.14 part sodium persulfate in 8 parts water and 1 part of a 0.1% solution of $FeSO_4 \cdot 7H_2O$ are added.

Two monomer emulsions of different compositions are prepared and added in sequence (A followed by B) over a period of 3 hours and 25 minutes while maintaining the temperature at 60°C.

| | A Parts | B Parts |
|---|---|---|
| Water | 20 | 20 |
| Sodium dodecylbenzene sulfonate (23% soln.) | 0.3 pts soln. | 0.3 pts. soln. |
| Butyl acrylate | 78 | 78 |
| Methyl methacrylate | 70 | — |
| Styrene | — | 69 |
| Methacrylic acid | 1.95 | 3 |
| Total | 170.25 | 170.3 |

Concurrently with the monomer emulsion additional catalysts consisting of 0.8 part sodium persulfate in 20 parts water and 0.56 part sodium bisulfite in 20 parts water are gradually added.

The particle size of the unneutralized film-forming emulsion polymer is 0.61 micrometer. The alkali-swellable portion is completely encapsulated as determined by the fact that the acid in this portion is not reacted when the latex is titrated with aqueous potassium hydroxide. Upon neutralization with aqueous ammonia the particle diameter increases due to uptake of water.

Example 10

EASP, 1 core/20 sheath, four fifths of shell is crosslinkable
1 part core 5 BA/65 MMA/30 MAA+1.5 X-970
4 parts sheath 52 BA/46 MMA/2 MAA
16 parts sheath 95 EA/4 AM:MOAM; 1:1 mol ratio/1 AA
(AM is acrylamide and MOAM is methylolacrylamide)

A portion of unneutralized alkali-swellable polymer dispersion prepared as in Example 1 but of 0.22 micrometer diameter, a composition of 5 parts butyl acrylate, 65 parts methyl methacrylate, and 30 parts methacrylic acid, together with 1.5 parts butandiol dimethacrylate and having 29.43% solids (63.6 parts of dispersion, 18.44 parts solid polymer) is added to 160 parts water in a glass reaction vessel, stirred and heated to 40°C. Then 0.16 parts of a 23% solution dodecylbenzene sulfonate, 0.16 part sodium persulfate in 5 parts water, and 4 parts of a 0.1% solution of $FeSO_4 \cdot 7H_2O$ are added.

Two monomer emulsions of different compositions are prepared and added in sequence (A followed by B) over a period of 2 hours and 10 minutes. The temperature is allowed to increase to 60°C during the addition of A and then to 85°C during the addition of B.

# 0 073 529

| | A | | B |
|---|---|---|---|
| Water | 10 | Water | 80 |
| Sodium dodecylbenzene sulfonate | 0.16 pts 23% soln. | Sodium dodecylbenzene sulfonate | 3 pts. 23% soln. |
| Butyl acrylate | 39 | Ethyl acrylate | 28.7 |
| Methyl methacrylate | 34.5 | 50% soln. of · methylol acrylamide and acrylamide | |
| Methacrylic acid | 1.5 | | |
| | | 1:1 mol ratio | 23.7 |
| | | Acrylic acid | 3 |
| Total | 85.16 | | 138.4 |

Concurrently with the monomer emulsion, additional catalysts consisting of 1 part sodium persulfate in 24 parts water and 0.7 part sodium bisulfite in 24 parts water are gradually added.

The final particle size of the unneutralized film-forming emulsion polymer is 0.61 micrometer. The alkali-swellable portion is completely encapsulated as determined by the fact that the acid in this portion is not titrated with introduction of aqueous potassium hydroxide. Upon neutralization with aqueous ammonia the particle diameter increases due to uptake of water. Coatings of the polymer emulsions are crosslinked by heating after drying.

Example 11

High temperature process. 87% encapsulated.

1 part core 5 BA/10 EA/65 MMA/30 MAA+0.5 X-970

20 parts shell 60 EA/38.7 MMA/1.3 MAA

A portion of unneutralized alkali-swellable polymer dispersion prepared as in Example 1 but of 0.29 micron diameter, the composition being 5 parts butyl acrylate, 10 parts ethyl acrylate, 55 parts methyl methacrylate, and 30 parts methacrylic acid together with 0.5 part butanediol dimethacrylate and having 29.3% solids (51.2 parts of dispersion, 15 parts solid polymer) is added to 140 parts water in a glass reaction vessel and stirred. 0.17 parts of a 23% solution of sodium dodecyl benzene sulfonate is added and the vessel and contents heated to 85°C. 0.8 parts sodium persulfate in 20 parts water is added and the following monomer emulsion gradually added over a period of 3 hours at a temperature of 85°C.

## Monomer emulsion

| | |
|---|---|
| Water | 40 |
| Sodium dodecyl benzene sulfonate | 0.8 pts (23% solution) |
| Ethyl acrylate | 180 |
| Methyl methacrylate | 116 |
| Methacrylic acid | 3.9 |
| Total | 340.70 |

The major portion of the alkali-swellable portion of this polymer emulsion is encapsulated as shown by titration with aqueous potassium hydroxide. At about 20°±2°C (room temperature) 87% of the alkali swellable acid is not titrated by aqueous potassium hydroxide over a period of less than 1 hour, corresponding to 87% encapsulation. The final unswollen particle diameter is 0.78 micrometer. This polymer emulsion when diluted and neutralized with ammonium hydroxide swells, increasing the particle diameter. 0.65 grams water per gram polymer is taken up in swelling as determined after separation by centrifugation.

Example 12

Three water-base paints are prepared, one from a commercial acrylic latex polymer of the type embraced by the disclosure in US—A—2795564, having a particle size intermediate that of the two heteropolymer dispersions obtained in Examples 3 and 4 and having approximately the same composition as the sheath of Examples 3 and 4. In the following Table I, the paints made from the polymers of Examples 3 and 4 are designated A and B respectively and that from the commercial latex is designated C. All three paints are formulated at 30% volume solids and 26.4% pigment volume solids and then there is added sufficient hydroxyethyl cellulose thickener (avilable under the tradename Natrosol[R] 250MR) to obtain an approximately equal low-shear viscosity. As shown in the table, only half as much hydroxyethyl cellulose is required by the heteropolymer paints A and B as by the commercial paint C. Also paints A and B have greater high-shear viscosity and concomitant greater film-build at natural spreading rate.

TABLE I

| Paint | Thickener[2] (lbs/100 gal) kg/m³ paint | Viscosity | | Film-build kg/m² (g/sq.ft.) |
|-------|----------------------------------------|-----------|-----------|-----------------------------|
| | | Low[3] shear | High[4] shear | |
| A | 2.76 (2.3) | 90 | 0.16 (1.6) | 0.146 (13.6) |
| B | 2.40 (2.0) | 87 | 0.12 (1.2) | 0.134 (12.5) |
| C | 5.64 (4.7) | 93 | 0.08 (0.8) | 0.120 (11.2) |

[2] Hydroxyethyl cellulose
[3] Stormer viscosity in Krebs units
[4] Viscosity at high shear (10,000 reciprocal seconds) in Ns/m² (poise) as measured by a cone and plate viscometer developed by Imperial Chemical Industries.

While the immediately preceding example shows advantages obtained by complete replacement of the water-insoluble emulsion polymer binder used in making an aqueous base paint with an aqueous dispersion of a core/sheath heteropolymer of the present invention, benefits can be obtained when an aqueous coating composition is formulated with a blend of latices (as the binder) comprising at least about 5% by weight of a dispersion of a water-insoluble core/sheath heteropolymer of the present invention and up to 95% by weight of an aqueous dispersion of a water-insoluble vinyl addition polymer of the type conventionally used in making aqueous coating compositions for use as water-base paints, as coating compositions for painting and dyeing of textile fabrics. The proportions given in the preceding sentence refer to the solids content of the blended polymer dispersions, the dispersions being supplied at solids contents of about 45 to 70% weight percent, or even lower or higher polymer solids content.

The other latex blended with the core/sheath heteropolymer dispersion to form the binder may be any vinyl addition polymer dispersion (i.e., latex or emulsion polymer) of the types commonly employed in the art at formulating aqueous coating compositions, such as acrylic dispersions disclosed in the Conn et al. patent mentioned hereinabove, polymers and copolymers of vinyl acetate, especially with vinyl chloride, vinylidene chloride; polymers of styrene or vinyltoluene with acrylic esters or butadiene; and especially emulsion copolymer dispersions of the various types mentioned which contain a small amount of acid copolymerized in the dispersed water-insoluble copolymer so that the coating compositions can be effectively used at a pH in the range of about 8 to 12, preferably at 8 to 10, without dissolving of the dispersed polymers in the blend which serves as the binder.

The following formulation may be used to prepare a water-base paint:

# 0 073 529

| Component | Parts |
|---|---|
| **Grind (pigment paste)** | |
| Dispersant (e.g. 25% Tamol 731) | 10.6 |
| Defoamer (e.g., Nopco NDW) | 2.0 |
| Propylene glycol | 68.4 |
| Titanium dioxide (e.g. RCL-9) | 263.5 |
| **Let-down** | |
| Propylene glycol | 49.2 |
| Coalescent (e.g. Texanol), optional | 13.0 |
| Wetting agent (e.g. Triton GR-7M) | 2.0 |
| Water | 50.9 |
| Preservative (e.g., Super Ad-It) | 1.0 |
| Binder (50% solids) | 412.4 |
| Defoamer | 3.0 |
| Cellulose ether (e.g. hydroxyethyl) | 0 to 5 |
| Water, to make a total of | 1064 parts |
| **The resultant paint has:** | |
| Pigment volume concentration | 26.4% |
| Volume solids | 29.8% |
| Weight solids | 44.6% |

As stated above, when a 50% solids aqueous dispersion of an acrylic polymer that is in widespread commercial use (namely Rhoplex[R] AC-388) is made into a paint by the formulation just described, 4.7 parts of dry hydroxyethyl cellulose (paint C in Table I) is needed to provide a low-shear viscosity suitable for brushing. In contrast, when the binder is one of the alkali-swellable core/sheath polymers of the present invention, only 2 to 2.3 parts of the hydroxyethyl cellulose is needed to obtain the same low-shear viscosity. The binder may comprise a blend of a heteropolymer dispersion of the present invention with a commercial latex or emulsion copolymer dispersion in which the polymer solids of the heteropolymer is at least about 5% by weight of the total polymer solids of the binder blend. Preferably, the relative proportions between the dispersed water-insoluble heteropolymer of the present invention and the other binder component comprising a vinyl addition polymer may be from 10:90 weight ratio to 90:10 weight ratio (solids basis). Both the heteropolymer and the other (vinyl addition polymer) component may be film-forming at ambient conditions of use.

Thus, the present invention contemplates the preparation of aqueous coating compositions comprising the mixing of the aqueous core/sheath heteropolymer dispersion of the present invention with an aqueous dispersion of a water-insoluble particulate material selected from (a) pigments, (b) extenders (e.g., silica and china clays mentioned in the Conn et al. patent, *supra*), and (c) vinyl addition polymers, especially those containing a small amount (e.g. 1/2 to 3 or even up to about 5 weight percent) of an acid, such as acrylic acid, methacrylic acid, and itaconic acid, which are film-forming at ambient temperatures and (d) mixtures of such particulate materials as are mentioned in (a), (b), and (c), adding a volatile basic swelling agent to raise the pH to about 8 to 12 or higher, thereby at least partially neutralizing the acid of the cores and swelling them, depositing a film of the composition on a solid substrate to be coated and/or impregnated and subsequently drying the film. Generally, the advantages of the use of the heteropolymer dispersion are noticeable when there is used an amount of such dispersion as will provide a quantity of core/sheath polymer solids that is at least 5% by weight of the total solids of the particular dispersions (a), (b), (c), or (d), and the benefits become more pronounced as the proportion of the core/sheath heteropolymer increases to 10% or higher, the most notable effect being observed when the proportion is increased to the range of 50% to 95% of the total particulate materials (solids).

The compositions are useful not only in the field of paints but also in many other fields. For example,

15

pigmented compositions may be applied to paper to provide coated products of various types. Grease-proof papers may be so prepared. Compositions may be modified with additional pigments and extenders, ratios of 4:1 to 30:1 of pigment to binder being best for coating of paper. The coated papers may be given a high gloss by a mild buffing.

Other interesting applications of the dispersions of interpolymers of this invention include their use as quicktack adhesives, particularly for paper and carboard, their use as additives for increasing the viscosity of solutions of urea-formaldehyde or melamine-formaldehyde condensates, or their use for sealing, priming, or coating leather. The dispersions may be added to textile finishing baths to improve the bulk, drape, and handle of textile fabrics. They may also be used to improve the abrasion resistance of fabrics and to decrease the lint available therefrom. They are also valuable for preparing pastes for the printing of textiles such as canvas.

Similar compositions are desirable as sealers on felts. They can be applied to cement, stucco, concrete and other porous bodies to seal pores and prevent dusting and flaking.

Another interesting utility is the separation of ammonia or amines from aqueous solutions such as of inorganic salts or bases. Ion exchange resins and the like are not normally useful to selectively remove ammonia or amines from such solutions.

Comparative Example A

A portion of unneutralized alkali swellable polymer dispersion prepared in Example 1 (71 parts of dispersion, 16 parts of solid polymer) is stirred in a glass reaction vessel and heated to 81°C. A solution of 0.1 part of ammonium persulfate in 3 parts of water is added. A monomer mixture of 22 parts of ethyl acrylate, 10 parts of methyl methacrylate and 0.4 parts of methacrylic acid is added gradually over a two-hour period while maintaining the temperature at 81°C. After the completion of the monomer addition, the temperature is held at 81°C for 39 minutes until greater than 98% of the monomer has reacted. The product is cooled to 25°C and filtered through cheesecloth. The solids content is 45% and the average particle diameter 0.6 micrometer. A dilute sample of the product is neutralized at 25°C with ammonia to pH 10. The particle diameter increases to 1.1 micrometer due to uptake of water.

This two-stage polymer dispersion is used to thicken a commercial latex: 100 g of Rhoplex[R] AC-64 (61% solids) is diluted with water to 40% solids giving a watery consistency 0.01 Ns/m$^2$ (10 cps); fifteen grams of the two-stage polymer dispersion is added and the pH is adjusted to 10 with ammonia; the Brookfield viscosity (spindle 3, 60 rpm) rises to 3 Ns/m$^2$ (3000 cps.).

A low core:shell ratio of 1:2 and the high temperature, led to less than 50% encapsulation of the core as determined by titration with KOH; thus, the high low shear viscosity.

Comparative Examples B-1 and B-2

For comparative purposes, alkali swellable core-sheath polymers were prepared according to the prior art (Example 1 of Kurth et al US—A—3875099)

Example B-1 Ammonium persulfate (0.50 g) and 0.70 g of a commercial emulsifier which is the reaction product of nonylphenol with 4 moles of ethylene oxide, subsequently sulfated and converted into the sodium salt (2.5 g of Alipal CO-433, 28% active) are dissolved at 80°C in 400 g of deionized water in a two-liter flask equipped with a condenser, stirring apparatus, and monomer feed pump. Over a period of eight minutes, an emulsion priorly prepared from 16.5 g of methyl methacrylate, 16.7 g of butyl acrylate, 5 g of methacrylic acid 0.07 g (active) of the aforementioned emulsifier, 0.05 g of the aforementioned initiator and 20 g of deionized water, is added dropwise to the solution at 80°C with stirring. Subsequently, an emulsion comprising 478.5 g of methyl methacrylate, 483.3 g of butyl acrylate, 1.79 g (active) of the aforementioned emulsifier, and 500 g of deionized water is added at 80°C over a period of 232 minutes along with a cofeed of 1.45 g of the aforementioned initiator dissolved in 50 g of deionized water. After everything is added the latex is bluish, viscous, relatively free of coagulum, with a particle diameter of around 0.1 micrometer. The pH is adjusted to 7.5 with aqueous ammonia. Almost immediately, the latex turns white, the viscosity drops and coagulum forms showing that the latex is unstable and is agglomerating. The batch is held at 80°C for two hours and then cooled to 50°c. At this point, 50 g of the reaction product of 1 mole of isononylphenol with 100 moles of ethylene oxide (diluted with a three-fold amount of water) is added. The batch is cooled to 25°C, adjusted to pH 9.6 with aqueous ammonia and filtered through a 100 mesh screen. The wet coagulum weighs 150 g. The solids content of the dispersion is 46.8% and the viscosity is 0.42 Ns/m$^2$ 42 (centipoises) (II/60). The dispersion is examined by means of optical microscopy; the particle size distribution is broad ranging from 0.5 to 2 micrometers in diameter. A portion of the final dispersion is treated with Amberlite IR-120 to remove ammonia and then titrated potentiometrically with 0.5 N potassium hydroxide: the titer of carboxylic acid is 0.033 meq per gram of solid polymer (pKa 8.2). The theoretical titer of copolymerized methacrylic acid is 0.055 meq per gram of solid polymer so that 60% of the polymerized methacrylic acid is titrated with the potassium hydroxide, indicating only about 40% encapsulation.

Example B-2

A second dispersion is prepared by the same recipe as used for the first except for a few changes to prevent agglomeration that occurred in the first: in the initial kettle charge, the amount of ammonium persulfate is increased to 5.0 g and the water is increased to 410 g; the amount of water in the second monomer emulsion is increased from 500 to 550 g and Alipal CO-436, the ammonium salt analog of Alipal CO-433, is substituted throughout using an equal weight of active ingredient. A dispersion free of coagulate is obtained. The solids content is 46.35 and the viscosity at pH 10 is 0.055 Ns/m$^2$ 55 (centipoises) (II/60). The titer carboxylic acid is 0.060 meq per gram of solid polymer (pKa 8.2): all of the polymerized methacrylic acid is titrated by the potassium hydroxide, indicating no encapsulation. The particle size of the dispersion is 0.21 micrometer as estimated by light scatter.

The large quantity of anionic emulsifier of Kurth et al. Example 1, in our experience with similar emulsifiers, would give extremely small first stage particles of about 0.05 micrometer. The core composition having a high level of butyl acrylate, the similarity of the first stage and second stage monomer compositions, and possibly other factors such as polymerization temperature, appear to have contributed to the lack of encapsulation encountered with the procedure of the Kurth et al Example 1. The other Kurth et al. examples are even further away from the invention.

Hydrophilic monomers are mentioned hereinabove. Suitable ones include (meth)acrylamide, vinyl acetate, hydroxyethyl (meth)acrylate, hydroxypropyl (meth)acrylate, dihydroxypropyl (meth)acrylate, diacetone (meth)acrylamide, N-vinyl pyrrolidone, methoxyethyl (meth)acrylate di- and triethylene glycol (meth)acrylate, polyethylene glycol (meth)acrylate and (meth)acrylonitrile.

## Claims

1. A process for making an aqueous dispersion of water insoluble core/sheath polymer particles comprising sequentially emulsion polymerizing, at a temperature of from 10° to 100°C in an aqueous medium containing free radical initiator, (a) at least one core monomer charge comprising monoethylenically unsaturated monomer having a group of the formula —HC=C<, at least one of such monomer having carboxylic acid group(s), the monomer being emulsified in the medium, the monomer comprising, as hydrophilic monomer, (i) non-acid monomer copolymerized with at least 5% of carboxylic acid monomer or (ii) 15—100% of acid monomer when no other hydrophilic monomer is present, based on the weight of the monomer utilized to prepare the core polymer particles, the core monomer having no more than 40% of butyl acrylate or no more than an amount of an equivalent monomer which would give a comparable T$_i$ when using the same comonomer combination;
to thereby form dispersed core polymer particles having an average diameter of 0.05 to 1 micrometer; and (b) then adding to the polymer dispersion resulting from (a) at least one monomer charge comprising monoethylenically unsaturated sheath monomer having no ionizable group to form at least one sheath polymer on the core particles, any monoethylenically unsaturated carboxylic acid in the sheath monomer being present in an amount of no more than 10% by weight of the total sheath monomer, the proportion of carboxylic acid in the sheath monomer not exceeding 1/3 the proportion thereof in the core monomer, the core/sheath particles having an average diameter, before neutralization and swelling, of 0.07 to 4.5 micrometers, the relative amounts of core-forming monomer and sheath-forming monomer being such that the ratio of the weight of the core to the weight of the total polymer in the resulting dispersed particles in unswollen condition is 1:4 to 1:100, said sheath being permeable at 20°C to aqueous volatile base selected from ammonia and amines, and substantially impermeable at 20°C to fixed or permanent bases including sodium, potassium, calcium or magnesium hydroxide, the exterior sheath having a T$_i$ of below 50°C, the particles being film-forming and the encapsulation being such as to give a titer of said polymerised acid with alkali metal hydroxide for less than 50% thereof thereby indicating more than 50% encapsulation; (c) neutralising with ammonia or amine so as to swell said core.

2. A process according to Claim 1 wherein the acid in (a) comprises acrylic acid, methacrylic acid, acryloxypropionic acid, methacryloxypropionic acid, acryloxyacetic acid, methacryloxyacetic acid, monomethyl acid maleate, monomethyl acid itaconate and/or crotonic acid.

3. A process according to any preceding claim wherein at least 85% of the core particles are encapsulated as evidenced by titration with aqueous potassium hydroxide.

4. A process according to any preceding claim in which the formation of dispersed core particles in a) is a multistage process involving first, the preparation of seed polymer from monoethylenically unsaturated monomer which may or may not comprise monomer containing an acid group, and a second stage polymerisation on the seed particles of ethylenically unsaturated monomer comprising
(1) 5 to 100 weight% of carboxylic acid,
(2) 0 to 95 weight% of monoethylenically unsaturated monomer lacking an ionizable group, and
(3) 0 to 20 weight% of polyethylenically unsaturated monomer,
using conditions to obtain core polymer particles having an average diameter of 0.1 to 0.5 micrometer in unswollen condition, and the subsequently polymerised core/sheath particles having an overall size of up to 2.0 micrometers in unswollen condition.

5. A process according to Claim 4 in which the acid is acrylic acid and/or methacrylic acid and the core/sheath particles have an average diameter of from about 0.2 to about 2.0 micrometers in unswollen condition and in which 0.1% to 3% of polyunsaturated crosslinking monomer is included in the core monomer mixture.

6. A process according to any preceding claim in which the formation of the sheath in (b) is a multistage process.

7. A process according to any preceding claim in which the exterior sheath monomer is all monoethylenically unsaturated so that said exterior sheath is not crosslinked.

8. A multi-stage polymer obtainable by a process as claimed in Claim 1 having at least one core stage polymerized from monomer comprising carboxylic acid monomer and at least one subsequent sheath stage encapsulating said acid-containing stage(s) as evidenced by titration of said polymerised acid with aqueous alkali metal hydroxide providing a titer for less than 50% of the acid, thereby indicating more than 50% encapsulation, said acid stage(s) containing sufficient acid groups to render the core swellable upon neutralisation with volatile base to at least twice its volume and said encapsulating stage(s) being permeable to said base, the exterior sheath having a $T_i$ of below 50°C and the particles being film-forming.

9. A polymer as claimed in Claim 8 wherein the degree of encapsulation is at least 85%.

10. A polymer as claimed in Claim 8 or 9 in which the exterior sheath of the core/sheath polymer has a $T_i$ of −40°C to +23°C.

11. The use of a polymer according to Claim 8, 9 or 10 or obtained by the process of any of Claims 1 to 7 as a thickening agent in an aqueous medium containing sufficient volatile base to at least partially neutralize the product to a pH of at least 6.

12. The use of an aqueous dispersion of polymer of Claim 8, 9 or 10 or obtained by a process according to any of Claims 1 to 7 in a mixture with an aqueous dispersion of a particulate material selected from pigments, extenders, vinyl addition emulsion polymers, and mixtures thereof as a coating composition to which is added volatile basic swelling agent to raise the pH of the composition to 6 to 10 or higher, thereby at least partially neutralising the acid of the core(s) and swelling the heteropolymer core(s).

## Patentansprüche

1. Verfahren zur Herstellung einer wäßrigen Diserpsion von wasserunlöslichen Kern/Schale-Polymerteilchen, dadurch gekennzeichnet, daß aufeinanderfolgend in Emulsion bei einer Temperatur von 10 bis 100°C in einem wäßrigen Medium, das einen freie Radikale liefernden Initiator enthält, (a) wenigstens eine Kern-Monomercharge aus monoethylenisch ungesättigtem Monomeren mit einer Gruppe der Formel —HC=C<, wobei wenigstens ein derartiges Monomeres eine oder mehrere Carboxylgruppen aufweist, das Monomere in dem Medium emulgiert ist, das Monomere als hydrophiles Monomeres (i) aus einem nichtsauren Monomeren, copolymerisiert mit wenigstens 5% Carbonsäuremonomeren, oder (ii) 15 bis 100% des sauren Monomeren, wenn keine anderes hydrophiles Monomeres vorliegt, bezogen auf das Gewicht des Monomeren, besteht, das zur Herstellung der Kernpolymerteilchen verwendet wird, wobei das Kernmonomere nicht mehr als 40% Butylacrylat oder nicht mehr als eine Menge eines äquivalenten Monomeren, die einen vergleichbaren $T_i$-Wert ergibt, wenn die gleiche Comonomerkombination verwendet wird, aufweist, unter Bildung von dispergierten Kernpolymerteilchen mit einem durchschittlichen Durchmesser von 0,05 bis 1 µm polymerisiert wird, und (b) dann der aus (a) resultierenden Polymerdispersion wenigstens eine Monomercharge zugesetzt wird aus einem monoethylenisch ungesättigten Schalenpolymeren auf den Kernteilchen, wobei etwa vorhandene monoethylenisch ungesättigte Carbonsäure in dem Schalenmonomeren in einer Menge von nicht mehr als 10 Gew.-% des gesamten Schalenmonomeren vorliegt, die Menge der Carbonsäure in dem Schalenmonomeren nicht ein Drittel der Menge davon in dem Kernmonomeren übersteigt, die Kern/Schalen-Teilchen einen durchschnittlichen Durchmesser vor der Neutralisation und dem Anquellen von 0,07 bis 4,5 µm besitzen, die relativen Mengen an kernbildendem Monomeren und schalenbildenden Monomeren derartig sind, daß das Verhältnis des Gewichts des Kerns zu dem Gewicht des gesamten Polymeren in den erhaltenen dispergierten Teilchen in nichtgequollenem Zustand 1:4 bis 1:100 beträgt, die Schale bei 20°C gegenüber einer wäßrigen flüchtigen Base durchlässig ist, ausgewählt aus Ammoniak und Aminen, und im wesentlichen undurchlässig ist bei 20°C gegenüber fixierten oder permanenten Basen, wie Natrium-, Kalium-, Kalzium- oder Magnesiumhydroxid, wobei die äußere Schale einen $T_i$-Wert unterhalb 50°C besitzt, die Teilchen filmbildend sind und die Einkapselung derartig ist, daß ein Titer der polymerisierten Säure mit Alkalimetallhydroxid für weniger als 50% davon erreicht wird, was auf eine mehr als 50 %ige Einkapselung hinweist und, (c) eine Neutralisation mit Ammoniak oder Amin zum Quellen des Kerns durchgeführt wird.

2. Verfahren nach Anspruch 1, dadurch gekennzeichnet, daß die Säure in (a) aus Acrylsäure, Methacrylsäure, Acryloxypropionsäure, Methacryloxypropionsäure, Acryloxyessigsäure, Methacryloxyessigsäure, saurem Monomethylmaleat, saurem Monomethylitaconat und/oder Crotonsäure besteht.

3. Verfahren nach einem der vorhergehenden Ansprüche, dadurch gekennzeichnet, daß wenigstens 85% der Kernteilchen eingekapselt sind, wie sich durch eine Titration mit wäßrigem Kaliumhydroxid ergibt.

4. Verfahren nach einem der vorhergehenden Ansprüche, dadurch gekennzeichnet, daß die Bildung von dispergierten Kernteilchen in (a) ein Vielstufenverfahren ist, wobei zuerst die Herstellung von Saatpolymerem aus monoethylenisch ungesättigten Monomerem vorgesehen ist, das gegebenenfalls aus einem Monomeren bestehen kann, das eine saure Gruppe enthält, und eine Polymerisation in zweiter Stufe auf die Saatteilchen des ethylenisch ungesättigten Monomeren aus

(1) 5 bis 100 Gew.-% Carbonsäure,

(2) 0 bis 95 Gew.-% monoethylenisch ungesättigtem Monomeren, dem es an einer ionisierbaren Gruppe fehlt, und

(3) 0 bis 20 Gew.-% eines polyethylenisch ungesättigten Monomeren

durchgeführt wird, wobei Bedingungen eingehalten werden, um Kernteilchen zu erhalten, die einen durchschnittlichen Durchmesser von 0,1 bis 0,5 µm in nichtgequollenem Zustand aufweisen, und die anschließend polymerisierten Kern-Schale-Teilchen eine Gesamtgröße von bis zu 2,0 µm in nichtgequollenem Zustand besitzen.

5. Verfahren nach Anspruch 4, dadurch gekennzeichnet, daß die Säure aus Acrylsäure und/oder Methacrylsäure besteht und die Kern/Schale-Teilchen einen durchschnittlichen Durchmesser von ungefähr 0,2 bis ungefähr 2,0 µm in nichtgequollenem Zustand aufweisen, wobei 0,1 bis 3% des polyungesättigten vernetzenden Monomeren in der Kernmonomermischung enthalten ist.

6. Verfahren nach einem der vorhergehenden Ansprüche, dadurch gekennzeichnet, daß die Bildung der Schale in (b) ein Vielstufenverfahren ist.

7. Verfahren nach einem der vorhergehenden Ansprüche, dadurch gekennzeichnet, daß das äußere Schalenmonomere monoethylenisch ungesättigt ist, so daß die äußere Schale nicht vernetzt ist.

8. Vielstufenpolymeres, erhältlich nach einem Verfahren gemäß Anspruch 1, mit wenigstens einer Kernstufe, polymerisiert aus einem Monomeren aus einem Carbonsäuremonomeren und wenigstens einer anschließenden Schalenstufe, welche die Säure enthaltende Stufe(n) einhüllt, wie sich durch eine Titration der polymerisierten Säure in wäßrigem Alkalimetallhydroxy unter Erzielung eines Titers von weniger als 50% der Säure zu erkennen gibt, was auf eine mehr als 50 %ige Einkapselung schließen läßt, wobei die Säurestufe(n) ausreichende Säuregruppen enthält (enthalten), um den Kern bei der Neutralisation mit einer flüchtigen Base auf wenigstens das Zweifache seines Volumens anquellbar zu machen, und die Einkapselungsstufe(n) gegenüber der Base durchlässig ist (sind), wobei die äußere Schale einen $T_i$-Wert von unterhalb 50°C besitzt und die Teilchen filmbildend sind.

9. Polymeres nach Anspruch 8, dadurch gekennzeichnet, daß der Einkapselungsgrad wenigstens 85% beträgt.

10. Polymeres nach Anspruch 8 oder 9, dadurch gekennzeichnet, daß die äußere Schale des Kern/Schalenpolymeren einen $T_i$-Wert von −40°C bis +23°C besitzt.

11. Verwendung eines Polymeren gemäß Anspruch 8, 9 oder 10, oder erhalten nach dem Verfahren gemäß einem der Ansprüche 1 bis 7, als Eindickungsmittel in einem wäßrigen Medium, das eine ausreichende Menge an flüchtiger Base enthält, um wenigstens teilweise das Produkt bis zu einem pH von wenigstens 6 zu neutralisieren.

12. Verwendung einer wäßrigen Dispersion des Polymeren gemäß Anspruch 8, 9 oder 10, erhalten nach einem Verfahren gemäß einem der Ansprüche 1 bis 7, in Mischung mit einer wäßrigen Dispersion eines in Form von Einzelteilchen vorliegenden Materials, ausgewählt aus Pigmenten, Verstreckungsmitteln, Vinyladditionsemulsionpolymeren und Mischungen davon, als Beschichtungsmasse, der ein flüchtiges basisches Quellmittel zugesetzt wird, um den pH der Masse auf 6 bis 10 oder darüber zu erhöhen, wobei wenigstens teilweise die Säure des Kerns bzw. der Kerne neutralisiert werden und der Hteropolymerkern (die Heteropolymerkerne) gequollen wird (gequollen werden).

**Revendications**

1. Un procédé pour préparer une dispersion aqueuse de particules polymères insolubles centre/ enveloppe comprenant la polymérisation séquencée en émulsion, à une température de 10 à 100°C dans un milieu aqueux contenant un amorceur radicalaire, de (a) au moins une charge de monomère de centre comprenant un monomère à insaturation monoéthylénique ayant un groupe de formule —HC=C<, au moins un de ces monomères ayant un ou plusieurs groupes acides carboxyliques, le monomère étant émulsifié dans le milieu, le monomère comprenant, comme monomère hydrophile, (i) un monomère non acide copolymérisé avec au moins 5% de monomère acide carboxylique ou (ii) 15 à 100% de monomère acide, lorsqu'aucun autre monomère hydrophile n'est présent, par rapport au poids du monomère utilisé pour préparer les particules de polymère de centre, le monomère de centre n'ayant pas plus de 40% d'acrylate de butyle ou pas plus d'une quantité d'un monomère équivalent qui produirait une $T_i$ comparable lors de l'emploi de la même combinaison de comonomère;

pour former ainsi des particules dispersées de polymère de centre ayant un diamètre moyen de 0,05 à 1 micromètre;

puis (b) addition à la dispersion de polymère obtenue en (a) d'au moins une charge de monomère comprenant un monomère d'enveloppe à insaturation monoéthylénique n'ayant pas de groupe ionisable pour former au moins un polymère d'enveloppe sur les particules de centre, tout acide carboxylique à insaturation monoéthylénique dans le monomère d'enveloppe étant présent en une quantité ne dépassant pas 10% du pois du monomère total d'enveloppe, la proportion d'acide carboxylique dans le monomère d'enveloppe ne dépassant pas 1/3 de sa proportion dans le monomère de centre, les particules centre/enveloppe ayant un diamètre moyen, avant neutralisation et gonflement, de 0,07 à 4,5 micromètres, les quantités relatives de monomère formant le centre et de monomère formant l'enveloppe étant telles que le rapport du poids du centre au poids du polymère total dans les particules dispersées obtenues à l'état non gonflé soit de 1/4 à 1/100, ladite enveloppe étant perméable à 20°C à une base volatile aqueuse choisie parmi l'ammoniac et les amines et pratiquement imperméable à 20°C aux bases fixes ou permanentes, y compris l'hydroxyde de sodium, de potassium, de calcium ou de magnésium, l'enveloppe extérieure ayant une $T_i$ inférieure à 50°C, les particules étant filmogènes et l'encapsulation étant telle que l'on obtienne un titre dudit acide polymérisé avec un hydroxyde de métal alcalin inférieur à 50% de celui-ci indiquant plus de 50% d'encapsulation; et (c) la neutralisation, avec le l'ammoniac ou de l'amine pour faire gonfler ledit centre.

2. Un procédé selon la revendication 1 dans lequel l'acide de (a) comprend l'acide acrylique, l'acide méthacrylique, l'acide acryloxypropionique, l'acide méthacryloxypropionique, l'acide acryloxyacétique, l'acide méthacryloxyacétique, le maléate acide de monométhyle, l'itaconate acide de monométhyle et/ou l'acide crotonique.

3. Un procédé selon l'une quelconque des revendications précédentes dans lequel au moins 85% des particules centres sont encapsulés comme le montre le titrage avec de l'hydroxyde de potassium aqueux.

4. Un procédé selon l'une quelconque des revendications précédentes dans lequel la formation des particules centres dispersées dans (a) est un procédé en plusieurs stades comprenant tout d'abord la préparation d'un polymère germe à partir d'un monomère à insaturation monoéthylénique qui peut ou peut ne pas comprendre de monomère contenant un groupe acide, et un second stade de polymérisation sur les particules germes du monomère à insaturation éthylénique comprenant

(1) 5 à 100% en poids d'acide carboxylique,

(2) 0 à 95% en poids de monomère à insaturation monoéthylénique dépourvu de groupe ionisable et

(3) 0 à 20% en poids de monomère à insaturation polyéthylénique,

en utilisant des conditions pour obtenir des particules de polymère centre ayant un diamètre moyen de 0,1 à 0,5 micromètre à l'état non gonflé et les particules centre/enveloppe polymérisées ultérieurement ayant une taille globale allant jusqu'à 2,0 micromètres à l'état non gonflé.

5. Un procédé selon la revendication 4, dans lequel l'acide est l'acide acrylique et/ou l'acide méthacrylique et les particules centre/enveloppe ont un diamètre moyen d'environ 0,2 à environ 2,0 micromètres à l'état non gonflé et où 0,1% à 3% du monomère réticulant polyinsaturé sont inclus dans le mélange monomère de centre.

6. Un procédé selon l'une quelconque des revendications précédentes dans lequel la formation de l'enveloppe en (b) est un procédé en plusieurs stades.

7. Un procédé selon l'une quelconque des revendications précédentes dans lequel le monomère de l'enveloppe extérieure est totalement à insaturation monoéthylénique, si bien que ladite enveloppe extérieure n'est pas réticulée.

8. Un polymère à plusieurs couches pouvant être obtenu selon un procédé comme revendiqué dans la revendication 1 ayant au moins une couche de centre polymérisée à partir d'un monomère comprenant un acide carboxylique monomère et au moins une couche ultérieure d'enveloppe encapsulant le ou lesdites couches contenant un acide, comme le montre le titrage dudit acide polymérisé avec un hydroxyde de métal alcalin aqueux qui fournit un titre de moins de 50% de l'acide, ce qui indique une encapsulation de plus de 50%, la ou lesdites couches acides contenant suffisamment de groupes acides pour rendre le centre gonflable par neutralisation avec une base volatile au moins au double de son volume et la ou lesdites couches d'encapsulation étant perméables à ladite base, l'enveloppe extérieure ayant une $T_i$ inférieure à 50°C et les particules étant filmogènes.

9. Un polymère comme revendiqué dans la revendication 8 dans lequel le degré d'encapsulation est d'au moins 85%.

10. Un polymère comme revendiqué dans la revendication 8 ou 9, dans lequel l'enveloppe extérieure du polymère centre/enveloppe a une $T_i$ de −40°C à +23°C.

11. L'utilisation d'un polymère selon la revendication 8, 9 ou 10 ou obtenu selon le procédé de l'une quelconque des revendications 1 à 7 comme agent épassissant dans un milieu aqueux contenant suffisamment de base volatile pour neutraliser au moins partiellement le produit à un pH d'au moins 6.

12. L'utilisation d'une dispersion aqueuse de polymère de la revendication 8, 9 ou 10 ou obtenu par un procédé selon l'une quelconque des revendications 1 à 7 dans un mélange avec une dispersion aqueuse d'une matière particulaire choisie parmi les pigments, les diluants, les polymères d'émulsion d'addition vinylique et leurs mélanges comme composition de revêtement à laquelle on ajoute un agent gonflant basique volatil pour élever le pH de la composition entre 6 et 10 ou plus afin de neutraliser au moins partiellement l'acide du ou des centres et gonfler le ou les centres d'hétéropolymère.